# FASCICULE DE BREVET EUROPEEN

(11) **EP 3 028 957 B1**
(45) Date de publication et mention de la délivrance du brevet: **12.04.2017**
(21) Numéro de dépôt: 15196419.4
(22) Date de dépôt: 26.11.2015
(51) Int. Cl.: B65D 81/34, B65D 51/16

(54) **COUVERCLE REVERSIBLE ET RECIPIENT FORMANT UNE BOITE ALIMENTAIRE A VOLUME VARIABLE**
UMKEHRBARER DECKEL UND BEHÄLTER, DER EINE LEBENSMITTELDOSE MIT VARIABLEM VOLUMEN BILDET
REVERSIBLE LID AND CONTAINER FORMING A FOOD BOX WITH VARIABLE VOLUME

(30) Priorité: 02.12.2014 FR 1461802
(43) Date de publication de la demande: 08.06.2016
(73) Titulaire: SEB S.A., 69130 Ecully (FR)
(72) Inventeur: LOAIZA ALVAREZ, Jorge, 050007 MEDELLIN (CO); SANCHEZ GRISALES, David, 08037 BARCELONA (ES); BALSEIRO BOTERO, Catalina, 74000 ANNECY (FR); PLICHON, Stéphane, 74350 ALLONZIER-LA-CAILLE (FR); NYS, Nicolas, 74000 ANNECY (FR)
(74) Mandataire: Bourrières, Patrice

(56) Documents cités:
- EP-A1- 1 332 982
- US-A- 4 181 146
- US-A- 5 409 126

## Description

La présente invention concerne de manière générale une boite alimentaire pour la conservation et le réchauffage des aliments.

L'invention concerne plus particulièrement une boite à volume variable qui comprend un couvercle réversible adapté à la conservation et au réchauffage d'aliments.

Les boites alimentaires à volume variable pour la conservation des aliments sont connues et visent en outre à réduire la quantité d'air contenue dans l'espace de stockage des aliments afin de réduire l'oxydation des aliments liée à l'air. Le fait d'avoir un volume variable permet également de stocker une plus grande quantité d'aliments.

A cet effet, ces boites comprennent deux bacs, dont un grand bac et un plus petit bac. Les bacs sont construits de manière à ce que le plus petit des deux bacs puisse être placé à l'intérieur du plus grand de manière réversible et dans cette position d'empilage, le plus petit bac agit comme élément de fermeture pour le plus grand bac. Si le volume des aliments à stocker dans le plus grand bac l'impose, le plus petit bac peut être renversé pour répondre à ce cas particulier, le volume de stockage de la boite est alors augmenté, et il est également utilisé comme élément de fermeture pour le plus grand bac.

Le document US4091953 décrit un tel dispositif.

Un des inconvénients rencontrés dans un tel dispositif concerne le cas où un utilisateur souhaite réchauffer directement au four micro-onde les aliments contenus dans la boite et ceci quelle que soit la configuration de fermeture de la boite. En effet lors d'un passage au micro onde, si la pression à l'intérieur de la boite vient à dépasser une certaine valeur, le système de fermeture n'est plus capable de maintenir les deux bacs entre eux ce qui a pour effet de projeter un des bacs dans le micro onde. Ceci vient de l'impossibilité d'évacuer la vapeur de manière contrôlée.

La présente invention vise donc à résoudre ces problèmes sus mentionnés en proposant une boite à volume variable qui soit adaptée à la conservation et au réchauffage des aliments, et ceci quelle que soit le la configuration de fermeture de la boite.

Afin d'atteindre cet objectif, l'invention concerne un couvercle réversible pour boite de conservation ou de réchauffage comprenant des premiers moyens de fixation étanches destinés à coopérer avec un bord supérieur d'un récipient lorsque le couvercle est disposé selon un premier sens sur le récipient et des seconds moyens de fixation étanches destinés à coopérer avec le bord supérieur du récipient lorsque le couvercle est disposé en sens inverse sur le récipient, le couvercle présentant une partie en relief qui peut être orientée vers l'intérieur du récipient pour former avec ce dernier une première enceinte fermée présentant un premier volume, ou orientée vers l'extérieur du récipient pour former avec ce dernier une seconde enceinte fermée présentant un second volume, distinct du premier volume, caractérisé en ce que le couvercle comporte un dispositif bidirectionnel d'évacuation de la vapeur reliant deux faces opposées du couvercle et en ce que le dispositif bidirectionnel d'évacuation permet le passage d'un flux entre les deux faces du couvercle lorsque la différence de pression entre les deux faces est supérieure ou égale une valeur P0 notamment lors du réchauffage d'un aliment dans un four micro onde.

Un avantage procuré par un tel couvercle est que la boite fermée peut passer au four micro onde quel que soit son volume et est donc adaptée au réchauffage d'aliments.

Selon une caractéristique de l'invention, le dispositif bidirectionnel d'évacuation de la vapeur est hermétique à l'air lorsque la différence de pression entre les deux faces du couvercle est inférieure à la valeur P0.

L'avantage est d'avoir un volume étanche à l'air dans la boite qui fait qu'elle est adaptée à la conservation d'un aliment.

Selon une caractéristique de l'invention, le dispositif bidirectionnel d'évacuation de la vapeur est conçu pour assurer une herméticité à un flux d'eau.

L'avantage est d'avoir une boite adaptée au stockage d'un aliment, qu'il soit liquide ou solide, et qui permette d'éviter les fuites hors de la boite notamment lors d'un transport si la boite se retourne.

Selon une caractéristique de l'invention, le dispositif bidirectionnel d'évacuation de la vapeur comprend une première soupape unidirectionnelle qui laisse passer un flux de vapeur lorsque la différence de pression entre une première face et une seconde face du couvercle est supérieure ou égale à une valeur et qui est étanche lorsque la différence de pression entre la première et la seconde face du couvercle est inférieure P0, et une seconde soupape, positionnée en opposition de la première soupape, qui laisse passer un flux de vapeur lorsque la différence de pression entre la seconde face et la première face du couvercle est supérieure ou égale à une valeur P0 et qui est étanche lorsque la différence de pression entre la seconde et la première face du couvercle est inférieure à P0.

L'avantage est d'avoir un couvercle qui soit adapté au réchauffage et à la conservation des aliments ou des liquides.

Selon une caractéristique de l'invention, la première soupape est composée d'un premier opercule et d'un ou plusieurs canaux primaires traversant le couvercle, ledit premier opercule est maintenu sur un coté du couvercle par un premier moyen de maintien et il recouvre entièrement et de manière étanche les un ou plusieurs canaux primaires et à partir et au delà de la pression P0, ledit premier opercule se déforme sous l'effet d'un flux qui circule dans les un ou plusieurs canaux primaires, de manière à permettre le passage du flux de la première ou de la seconde enceinte vers l'extérieur de celle ci par les uns ou plusieurs canaux primaires et

La seconde soupape est composée d'un second opercule et d'un ou plusieurs canaux secondaires traversant le couvercle, ledit second opercule est maintenu sur le couvercle, du coté opposé au premier opercule, par un second moyen de maintien, et il recouvre entièrement et de manière étanche les un ou plusieurs canaux secondaires et à partir et au delà de la pression P0, ledit second opercule se déforme sous l'effet d' un flux qui circule dans les un ou plusieurs canaux secondaires, de manière à permettre le passage du flux de la première ou de la seconde enceinte vers l'extérieur par les un ou plusieurs canaux secondaires.

L'avantage est d'avoir un dispositif bidirectionnel d'évacuation à deux valves qui fonctionnent en opposition et les deux valves sont positionnées indépendamment l'une de l'autre.

Selon une caractéristique de l'invention, le premier et le second opercule sont positionnés en vis-à-vis l'un de l'autre et de part et d'autre du couvercle, le premier moyen de maintien et le second moyen de maintien sont réunis en un moyen de maintien commun qui est constitué par une ouverture centrale qui traverse le couvercle de part en part de celui-ci et dans laquelle est monté serré un moyeu central qui maintient le premier et le deuxième opercule ensemble, et le premier opercule recouvre de manière étanche les un ou plusieurs canaux secondaires et le second opercule recouvre de manière étanche les un ou plusieurs canaux primaires.

L'avantage est d'avoir un dispositif bidirectionnel d'évacuation à deux valves qui fonctionnent en opposition et qui soient combinées.

Selon une caractéristique de l'invention, le premier opercule comprend un ou plusieurs trous traversant primaires qui sont positionnés en face des un ou plusieurs canaux secondaires et le second opercule comprend un ou plusieurs trous traversant secondaires qui sont positionnés en face des un ou plusieurs canaux primaires.

L'avantage est d'avoir deux valves qui fonctionnent en opposition et qui soient combinées pour permettre un réchauffage et une conservation des aliments dans la boite.

Selon une caractéristique de l'invention, les un ou plusieurs canaux primaires ou les un ou plusieurs canaux secondaires comprennent un ou plusieurs épaulements qui remontent dans les un ou plusieurs trous traversant primaires ou dans les un ou plusieurs trous traversant secondaires de manière à augmenter l'efficacité de l'étanchéité en limitant le passage d'eau entre les opercules et le couvercle.

Selon une caractéristique de l'invention, le couvercle comprend une zone bombée sur laquelle les opercules sont positionnés en contrainte de manière à ne pas laisser passer de flux.

L'avantage est d'augmenter l'étanchéité des deux valves.

Selon une caractéristique de l'invention, une collerette qui entoure les opercules est intégrée de part et d'autre du couvercle, de manière à assurer une étanchéité à tout flux de la première ou de la seconde enceinte.

L'avantage est d'augmenter l'étanchéité des deux valves.

Selon une caractéristique de l'invention, les opercules sont réalisés en matière silicone ou élastomères thermoplastiques (TPE).

Selon une caractéristique de l'invention, les premiers et seconds moyens de fixations étanches sont constitués par une languette positionnée sur le pourtour et à l'extérieur du couvercle, et la languette comprend une première rainure d'obturation placée au-dessus de celle-ci et une seconde rainure d'obturation placée en-dessous de la languette ; et la première et la seconde rainure présentent un profil en U.

Selon une caractéristique de l'invention, les opercules comprennent sur leur surface en contact avec le couvercle, une finition poli miroir qui permet d'augmenter l'efficacité d'étanchéité des soupapes et la partie du couvercle en contact avec la surface des opercules peut comprendre ou non une finition poli miroir.

Selon une caractéristique de l'invention, le premier opercule et/ou le second opercule comprend au moins un plot dimensionné pour s'insérer dans les un ou plusieurs canaux primaires et/ou dans les un ou plusieurs canaux secondaires.

De cette manière l'étanchéité du dispositif bidirectionnel d'évacuation de la vapeur est renforcée puisque les différents canaux sont étanchéifiés par les plots. En outre cela ne change pas le fonctionnement général du dispositif bidirectionnel d'évacuation de la vapeur car le flux pourra continuer à circuler dans les canaux au-delà d'une certaine pression.

L'invention concerne également une boite de conservation ou de réchauffage comprenant un couvercle et un récipient qui comprend un bord supérieur qui vient coopérer avec les moyens de fixation étanches du couvercle.

Selon une caractéristique de l'invention, le bord supérieur a un profil oblong qui vient s'insérer dans la première rainure d'obturation pour former la première enceinte ou dans la seconde rainure d'obturation pour former la seconde enceinte.

L'avantage est d'augmenter l'étanchéité de la boit lorsque celle-ci se retourne.

Selon une caractéristique de l'invention, la boite comprend un capot comprenant un bord libre qui vient coopérer avec la première rainure d'obturation ou avec la seconde rainure d'obturation de manière à former une enceinte étanche.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'une boite conforme à l'invention ;
- la figure 2 représente une vue en coupe d'une boite dans un premier mode de fermeture et avec un premier mode de réalisation du dispositif d'évacuation de vapeur ;
- la figure 3 représente une vue en coupe d'une boite d'une boite dans un second mode de fermeture et avec le premier mode de réalisation du dispositif d'évacuation de vapeur ;
- la figure 4 représente une vue éclatée en perspective du couvercle avec un dispositif d'évacuation de vapeur dans le premier mode de réalisation ;
- la figure 5 représente une vue en coupe d'une boite dans le premier mode de fermeture avec un second mode de réalisation du dispositif d'évacuation de vapeur ;
- la figure 6 représente une vue en coupe d'une boite dans le second mode de fermeture avec le second mode de réalisation du dispositif d'évacuation de vapeur ;
- la figure 7 représente une vue en perspective et en coupe du dispositif d'évacuation de vapeur dans une variante de réalisation.
- la figure 8 représente une vue en coupe dans une variante de réalisation.

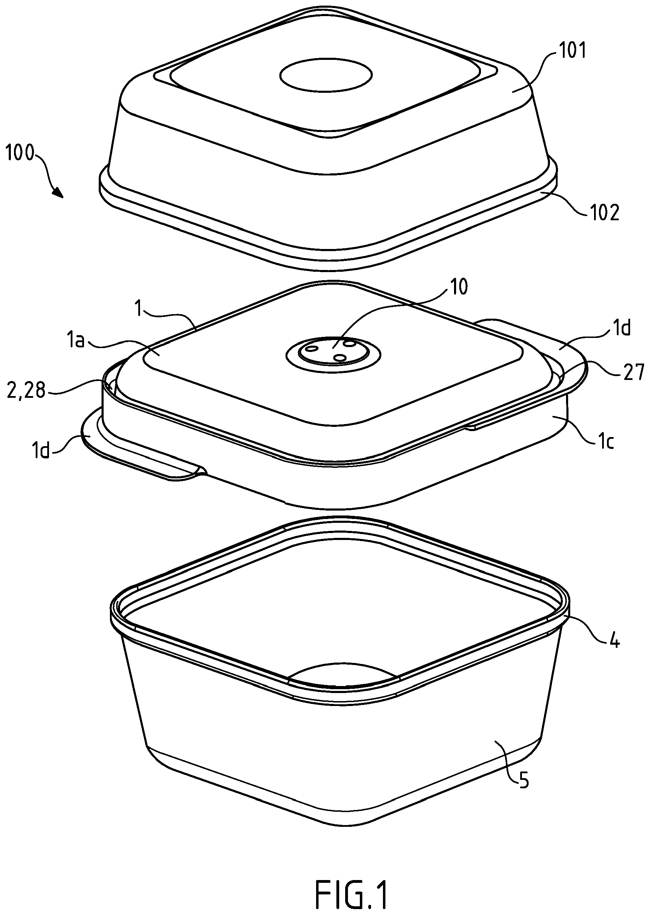

Comme visible sur la figure 1, l'invention concerne un couvercle 1 comprenant une partie en relief qui est composé d'une paroi 1a de fond, avantageusement plane, et d'une ou plusieurs parois 1b latérales qui viennent entourer la paroi 1a de fond de manière à former un contenant pour des aliments solides ou liquides.

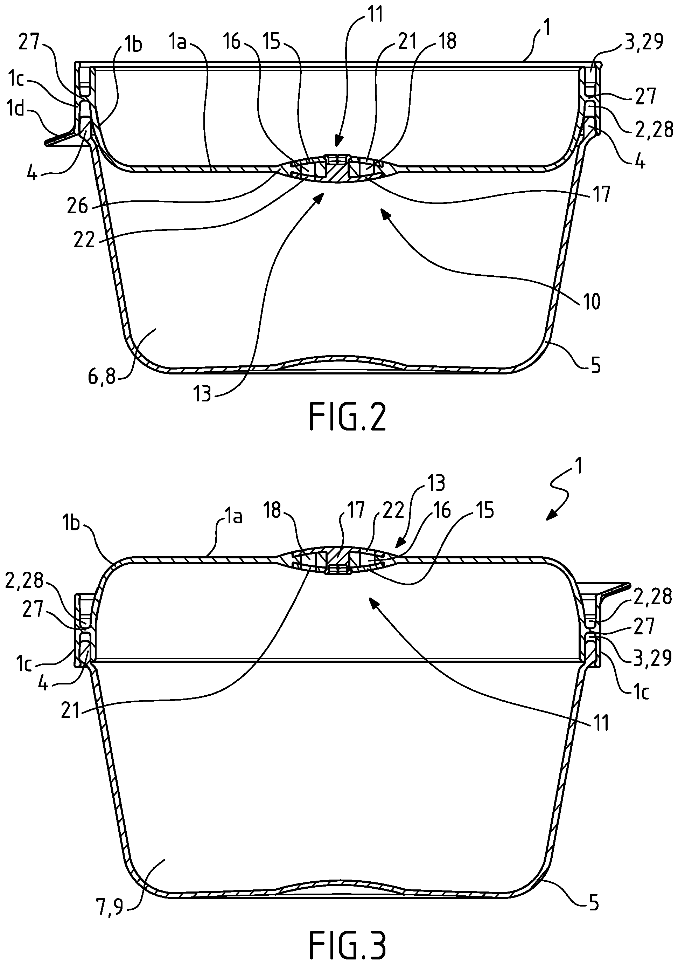

Comme visible à la figure 3, ce couvercle 1 comprend un premier 2 moyen de fixation et un second 3 moyen de fixation qui sont constitués par une languette 27 positionnée sur le pourtour et à l'extérieur du couvercle 1. Plus précisément, la languette 27 s'étend à partir de la paroi 1 b latérale et perpendiculairement vers l'extérieur du couvercle 1. Cette languette 27 peut être positionnée sensiblement au milieu de la paroi 1 b latérale. Dans d'autres variantes de réalisation du positionnement de la languette 27, celle-ci peut être positionnée sur la moitié basse de la paroi 1 b latérale, ou encore sur la moitié haute de la paroi 1b latérale. De manière préférentielle elle forme avec la paroi 1 b latérale un angle droit. Dans d'autres variantes de positionnement, elle forme avec la paroi 1 b latérale un angle compris entre 1 et 89° par rapport à la paroi 1 b latérale.

En outre le premier 2 et le second 3 moyen de fixation comprennent une paroi 1c périphérique qui est positionnée à l'extrémité extérieure de la languette 27. Elle s'étend parallèlement à la paroi 1 b latérale du couvercle 1 au dessus et en dessous de la languette 27, de manière à former une première 28 rainure d'obturation qui est positionnée au dessus de la languette 27 et une seconde 29 rainure d'obturation qui est positionnée en dessous de la languette 27. Sur la paroi périphérique 1c, des poignées 1d pour la préhension du couvercle 1 peuvent être positionnées.

La première 28 et la seconde 29 rainure d'obturation présentent des profils sensiblement en U et elles sont formées par, d'un coté la paroi 1 b latérale du couvercle 1 et de l'autre coté par la paroi 1 c périphérique de la languette 27.

Le couvercle 1 est prévu pour se positionner sur un récipient 5 qui comprend à cet effet un bord supérieur 4. Le bord supérieur 4 a un profil oblong. Plus précisément ce bord supérieur 4 est destiné à coopérer avec le premier 2 moyen de fixation ou avec le second 3 moyen de fixation de telle façon que le couvercle 1 peut être positionné de manière réversible sur le récipient 5 et former ainsi une boite 100 de conservation à volume variable selon la position du couvercle 1 sur le récipient 5.

En plus du couvercle 1 et du récipient 5, la boite 100 de conservation ou de réchauffage a un capot 101 qui comprend un bord libre 102 qui vient coopérer avec la première 28 rainure d'obturation ou avec la seconde 29 rainure d'obturation de manière à former également une enceinte étanche.

Ces premiers 2 moyens de fixation et ces seconds 3 moyens de fixation sont étanches, ce qui signifie que l'air, la vapeur ou même les liquides ne peuvent pas passer à travers ces moyens de fixation (2, 3). De même ceux-ci ne sont pas limités à la construction précédemment décrite mais peuvent également être des moyens de fixation magnétiques, des moyens de fixation à crochet ou tout autre moyen permettant d'assurer la fonction recherchée qui est de maintenir le couvercle 1, le récipient 5, et éventuellement le capot 101, ensemble de manière étanche et dans différents modes de fermeture de la boite 100.

Comme visible à la figure 2, qui représente un premier mode de fermeture de la boite 100, le couvercle 1 est positionné sur le récipient 5 et le bord supérieur 4 vient s'insérer dans le premier 2 moyen de fixation constitué par la première 28 rainure d'obturation pour former une première 6 enceinte fermée. La boite 100 de conservation ainsi formée est étanche.

Dans ce premier mode de fermeture, la paroi 1a de fond du couvercle 1 s'étend vers l'intérieur du récipient 5 de telle sorte que la paroi 1a de fond se trouve en dessous du bord supérieur 4 du récipient. Cette première 6 enceinte fermée permet ainsi de recevoir, conserver et réchauffer des aliments et elle définie un premier 8 volume de conservation ou de réchauffage des aliments qui correspond à tout l'espace que peuvent occuper les aliments dans cette première 6 enceinte fermée.

Comme visible à la figure 3, qui représente un deuxième mode de fermeture de la boite 100, le bord supérieur 4 vient s'insérer dans le second 3 moyen de fixation constitué par la seconde 29 rainure d'obturation pour former une seconde 7 enceinte fermée. Dans cette configuration, la paroi 1a de fond du couvercle 1 s'étend vers l'extérieur du récipient 5 et la paroi 1a de fond du couvercle 1 se trouve alors au dessus du bord supérieur 4 du récipient 5. Cette seconde 7 enceinte fermée permet également de recevoir, conserver et réchauffer des aliments et elle définit un second 9 volume qui correspond à tout l'espace que peuvent occuper des aliments dans la seconde 7 enceinte fermée.

Le second 9 volume est généralement plus grand que le premier 8 volume et permet donc de contenir un volume d'aliments à réchauffer ou à stocker plus grand.

En outre, le couvercle 1 comporte un dispositif 10 bidirectionnel d'évacuation de la vapeur qui est réalisé de manière non limitative suivant un premier mode de réalisation ou suivant un second mode de réalisation.

Selon le premier ou le second mode de réalisation du dispositif 10 bidirectionnel d'évacuation de la vapeur, visibles aux figures 2 à 6, celui-ci est composé d'une première 11 soupape et d'une seconde 13 soupape. La première 11 soupape et la seconde 13 soupape sont positionnées sur le couvercle 1 et fonctionnent en opposition comme cela sera expliqué par la suite.

Dans une autre variante de positionnement du dispositif 10 bidirectionnel d'évacuation de la vapeur, non représentée, la première 11 soupape et la seconde 13 soupape sont positionnées sur le récipient 5.

Dans les deux modes de réalisation du dispositif 10 bidirectionnel d'évacuation de la vapeur, la première 11 soupape est composée d'un premier 15 opercule positionné et maintenu sur une des faces du couvercle 1. La première 11 soupape comprend en outre un ou plusieurs canaux 16 primaires positionnés sous la première 11 soupape et qui traversent le couvercle 1 de part en part. Sur la face du couvercle 1 où se situe le premier 15 opercule, les une ou plusieurs ouvertures de ces un ou plusieurs canaux 16 primaires sont entièrement recouvertes et ceci de manière étanche. D'une manière générale on entendra par étanche qu'un flux liquide ou gazeux ne peut pas traverser ou passer. Dans ce cas précis, le flux qui traverse les un ou plusieurs canaux 16 primaires est entièrement stoppé par le premier 15 opercule en dessous d'une certaine pression P0 exercée par ce flux.

La seconde 13 soupape est quant à elle composée d'un second 17 opercule positionné sur la face du couvercle 1 opposée au premier 15 opercule. La seconde 13 soupape comprend un ou plusieurs canaux 18 secondaires traversant le couvercle 1 de part en part. Ces un ou plusieurs canaux 18 secondaires sont différents des un ou plusieurs canaux 16 primaires mais ces différents canaux (16, 18) sont tous débouchant de part en part du couvercle 1. Ces un ou plusieurs canaux 18 secondaires sont entièrement recouverts de manière étanche par le second 17 opercule de telle sorte qu'un flux liquide ou gazeux qui traverse les un ou plusieurs canaux 18 secondaires est stoppé par le second 17 opercule si la pression exercée par ce flux est inférieure à la pression P0.

Dans le cadre de l'invention, les opercules (15, 17) sont des disques circulaires qui ont une épaisseur de quelques millimètres.

Dans d'autres variantes de réalisation des opercules (15, 17), leurs formes peuvent être carrées, rectangulaires ou de toute autre forme.

Les opercules (15,17) sont réalisés en matière silicone ou élastomères thermoplastiques (TPE).

Dans le premier mode de réalisation du dispositif 10 bidirectionnel d'évacuation de la vapeur, visible aux figures 2 à 4, le second 17 opercule est positionné et maintenu en vis-à-vis du premier 15 opercule. De cette manière, les un ou plusieurs canaux 18 secondaires traversant le couvercle 1 sont recouverts de manière étanche par le premier 15 opercule et les un ou plusieurs canaux 16 primaires sont alors recouverts également de manière étanche par le second 17 opercule.

Afin que les flux puissent circuler dans les différents canaux, le premier 15 opercule comprend un ou plusieurs trous traversant 21 primaires. Ceux-ci sont positionnés en face des un ou plusieurs canaux 18 secondaires afin de permettre à un flux de rentrer dans les un ou plusieurs canaux 18 secondaires.

De la même façon, le second 17 opercule comprend un ou plusieurs trous traversant 22 secondaires qui sont positionnés en face des un ou plusieurs canaux 16 primaires et ceci afin de permettre au flux de rentrer dans les un ou plusieurs canaux 16 primaires.

Les un ou plusieurs canaux 18 secondaires étant différents des un ou plusieurs canaux 16 primaires, les un ou plusieurs trous traversant 21 primaires sont décalés des un ou plusieurs trous traversant 22 secondaires.

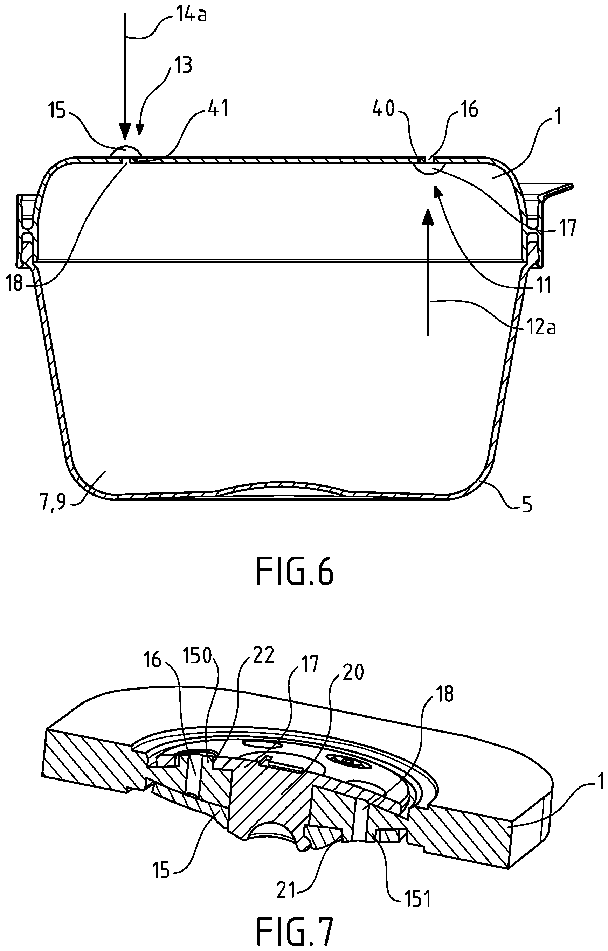

Dans une variante de réalisation des un ou plusieurs canaux 16 primaires ou des un ou plusieurs canaux 18 secondaires visible à la figure 7, ceux-ci comprennent un ou plusieurs épaulements (150, 151). Ces épaulements (150, 151) viennent respectivement dans les un ou plusieurs trous traversant 21 primaires ou dans les un ou plusieurs trous traversant 22 secondaires. Le but de ces épaulements (150, 151) est d'augmenter l'efficacité de l'étanchéité en limitant le passage d'eau entre les opercules (15, 17) et le couvercle 1.

Toujours en lien avec les figures 2 à 4, et afin de maintenir le premier 15 opercule et le second 17 opercule sur le couvercle 1, on utilise un moyen de fixation commun qui comprend un moyeu 20 central. Ce moyeu 20 central est relié au premier 15 opercule et au second 17 opercule à travers une ouverture 19 centrale qui est réalisée dans le couvercle 1 et qui est débouchant de part et d'autre du couvercle 1. Le moyeu 20 central peut être collé ou soudé au premier 15 opercule ou au second 17 opercule par exemple par moulage. Le moyeu 20 central est monté serré dans l'ouverture 19 centrale.

Le moyeu 20 central est sensiblement plus long que la longueur de l'ouverture 19 centrale de telle manière qu'une partie dépasse de ladite ouverture 19 centrale du côté opposé au second 17 opercule. La partie du moyeu 20 central dépassant du côté opposé au second 17 opercule permet de maintenir mécaniquement le premier 15 opercule avec le second 17 opercule. Ce maintien mécanique peut se faire par l'intermédiaire de clips 20a.

La longueur du moyeu 20 central peut alors être déterminée de manière à avoir un assemblage des deux opercules (15, 17) en contrainte contre le couvercle 1.

Dans une variante de réalisation non représentée, le moyeu 20 central et le second 17 opercule sont amovibles l'un de l'autre et sont retenus par un moyen de maintien supplémentaire, non représenté. Ce moyen de maintien est préférentiellement mécanique comme par exemple des clips, mais il n'est pas limitatif et il peut également être magnétique.

Le couvercle 1 peut également comprendre une zone bombée 25 sur laquelle les opercules (15, 17) reposent. Cette zone bombée 25 s'élève des deux cotés du couvercle 1 et comme décrit précédemment, le premier 15 opercule et le second 17 opercule sont positionnés en contrainte sur cette zone bombée 25.

Dans ce cas là, les un ou plusieurs canaux 16 primaires et les un ou plusieurs canaux 18 secondaires traversent la zone bombée 25.

L'intérêt d'une telle zone bombée 25 est de renforcer l'étanchéité des soupapes (11, 13) aux flux.

En complément de la zone bombée 25, le couvercle 1 comprend une collerette 26 qui entoure les opercules (15, 17). Cette collerette 26 s'étend à partir du couvercle 1 et arrive au moins à la hauteur des opercules (15, 17). Les opercules (15, 17) sont montés serrés dans la collerette 26. Comme visible sur les figures 2 et 3, la collerette 26 est circulaire de manière à épouser la forme circulaire des opercules (15, 17).

L'intérêt de la collerette 26 est que, combinée avec la zone bombée 25, l'étanchéité des soupapes (11, 13) est renforcée.

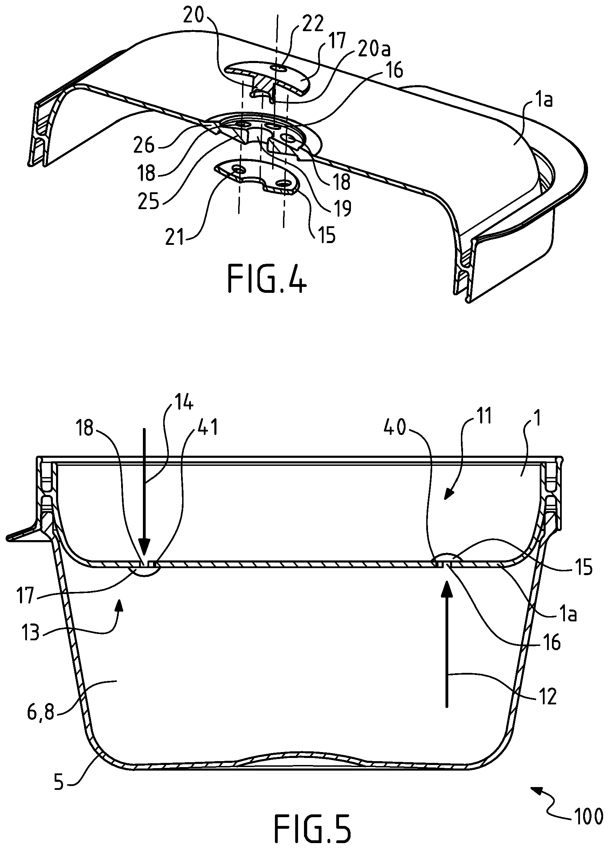

Dans le second mode de réalisation du dispositif 10 bidirectionnel d'évacuation de la vapeur, visible sur les figures 5 et 6, la première 11 soupape et la seconde 13 soupape ne sont pas positionnées en vis et vis et sont dissociées.

Dans ce cas là, la première 11 soupape est toujours composée d'un premier 15 opercule et d'un ou plusieurs canaux 16 primaires traversant le couvercle 1. Le premier 15 opercule est maintenu sur une des faces du couvercle 1 par un premier 40 moyen de maintien et le premier 15 opercule recouvre entièrement et de manière étanche les un ou plusieurs canaux 16 primaires.

La seconde 13 soupape est également composée d'un second 17 opercule et d'un ou plusieurs canaux 18 secondaires traversant le couvercle 1. Le second 17 opercule est maintenu sur le couvercle 1, du coté opposé au premier 15 opercule, par un second 41 moyen de maintien. Le second 17 opercule recouvre entièrement et de manière étanche les un ou plusieurs canaux 18 secondaires.

Que ce soit dans le premier ou dans le second mode de réalisation du dispositif 10 bidirectionnel d'évacuation de la vapeur, les opercules (15,17) peuvent comprendre sur leur surface en contact avec le couvercle 1, une surface avec une finition poli miroir destinée à augmenter l'efficacité d'étanchéité des soupapes (11, 13). La partie du couvercle 1 en contact avec la surface des opercules (15, 17) peut comprendre également ou non une surface avec une finition poli miroir.

Nous allons maintenant décrire le fonctionnement du dispositif 10 bidirectionnel d'évacuation de la vapeur dans son premier mode de réalisation visible aux figures 2 à 4.

Comme visible sur la figure 2 la boite 100 est dans son premier mode de fermeture, c'est-à-dire quand la paroi 1a de fond du couvercle 1 se trouve en dessous du bord supérieur 4 du récipient 5 et la boite 100 forme ainsi la première 6 enceinte fermée.

Comme décrit ci dessus la première 6 enceinte fermée permet de recevoir, conserver et réchauffer des aliments et elle définie le premier 8 volume de conservation ou de réchauffage des aliments.

Ce mode de fermeture est intéressant quand le volume à stocker ou à réchauffer des aliments est faible et qu'un utilisateur souhaite diminuer le volume de la boite 100 afin d'éviter l'altération des aliments qui se produit à cause de l'air contenu dans le volume de conservation.

Les aliments à stocker ou à réchauffer sont donc placés dans la première 6 enceinte.

Cette première 6 enceinte étant fermée et étanche, les aliments contenus dans le premier 8 volume de conservation ou de réchauffage vont s'échauffer et produire un flux d'air ou de vapeur lorsque la boite 100 est placée dans un four micro-onde en fonctionnement.

Le dispositif 10 bidirectionnel d'évacuation de la vapeur est conçu pour évacuer cette vapeur à l'extérieur de la première 6 enceinte.

Cette évacuation du flux à l'extérieur de la première 6 enceinte se produit lorsque qu'une surpression est créée dans la première 6 enceinte. Il faut entendre par surpression que la pression à l'intérieur de la première 6 enceinte est supérieure à la pression extérieure. Pour rétablir un équilibre des pressions, le flux doit donc être évacué à l'extérieur de la première 6 enceinte. La surpression est produite par l'échauffement des aliments ou de l'air contenus dans la première 6 enceinte.

Le flux va tout d'abord passer à travers les un ou plusieurs trous traversant 22 secondaires du second 17 opercule afin d'accéder aux un ou plusieurs canaux 16 primaires. Au bout de ces un ou plusieurs canaux 16 primaires, le flux est ensuite stoppé par le premier 15 opercule étanche. En dessous de la pression P0, le flux reste bloqué. Quand la pression à l'intérieur de la première 6 enceinte atteint la pression P0, alors le premier 15 opercule se déforme de manière à permettre le passage du flux de la première 6 enceinte vers l'extérieur de celle-ci.

Dans le même temps, le second 17 opercule est toujours positionné en contrainte contre le couvercle 1 et est toujours étanche.

Il est évident que dans ce mode de fermeture, le premier 2 moyen de fixation permet de maintenir le couvercle 1 et le récipient 5 jusqu'à au moins une pression intérieure à la première 6 enceinte de P0.

Dans le cas où la pression P0 n'est pas atteinte, le dispositif 10 bidirectionnel d'évacuation de la vapeur est également conçu pour assurer une herméticité à l'eau de la première 6 enceinte lorsque l'aliment à stocker est par exemple liquide. On entend par là que le dispositif 10 bidirectionnel d'évacuation de la vapeur est conçu de telle manière que le liquide qui repose sur le fond du couvercle 1 ne s'infiltrera pas à travers le dispositif 10 bidirectionnel et n'ira pas dans la première 6 enceinte, dès lors que la pression à l'intérieur de la première 6 enceinte ne dépasse pas P0. Cela est dû au fait que d'une part le premier 15 opercule n'est pas déformé par le passage du flux de la première 6 enceinte vers l'extérieur de celle-ci et d'autre part, le second 17 opercule est suffisamment rigide pour ne pas être déformé par le liquide qui a pénétré dans les un ou plusieurs canaux 18 secondaires et qui appuie donc sur le second 17 opercule qui conserve donc son étanchéité.

En lien maintenant avec la figure 3, qui représente le deuxième mode de fermeture de la boite 100, c'est-à-dire quand la paroi 1a de fond du couvercle 1 s'étend vers l'extérieur du récipient 5, nous allons décrire le fonctionnement du dispositif 10 bidirectionnel d'évacuation de la vapeur toujours dans son premier mode de réalisation.

Dans cette situation, la paroi 1a de fond du couvercle 1 se trouve alors au dessus du bord supérieur 4 du récipient 5 et forme la seconde 7 enceinte et le second 9 volume.

Ce mode de fermeture est intéressant quand un utilisateur doit stocker un grand volume d'aliments.

Le dispositif 10 bidirectionnel d'évacuation de la vapeur est également conçu pour évacuer un flux de vapeur ou d'air à l'extérieur de la seconde 7 enceinte lorsque celle-ci est en surpression.

De la même manière que précédemment, il faut entendre par surpression que la pression à l'intérieur de la seconde 7 enceinte est supérieure à la pression extérieure. Pour rétablir un équilibre des pressions, le flux doit donc être évacué à l'extérieur de cette seconde 7 enceinte.

Le flux va tout d'abord passer à travers les un ou plusieurs trous traversant 21 primaires du premier 15 opercule afin d'accéder aux un ou plusieurs canaux 18 secondaires. Au bout de ces un ou plusieurs canaux 18 secondaires, le flux est ensuite stoppé par le second 17 opercule étanche. En dessous de la pression P0, ce flux reste bloqué dans les un ou plusieurs canaux 18 secondaires. Quand la pression à l'intérieur de la seconde 7 enceinte atteint cette pression P0, alors le second 17 opercule se déforme de manière à permettre le passage du flux de la seconde 17 enceinte vers l'extérieur.

Dans le même temps le premier 15 opercule est toujours positionné en contrainte contre le couvercle 1 et est toujours étanche.

Il est évident dans ce mode de fonctionnement que le second 3 moyen de fixation permet de maintenir le couvercle 1 et le récipient 5 jusqu'à au moins une pression intérieure à la seconde 7 enceinte de P0.

Dans le cas où la pression P0 n'est pas atteinte, le dispositif 10 bidirectionnel d'évacuation de la vapeur est également conçu pour assurer une herméticité à l'eau de la seconde 7 enceinte.

Cela est dû au fait que le second 17 opercule n'est pas déformé par le passage du flux de la seconde 7 enceinte vers l'extérieur de celle-ci.

En lien avec les figures 5 et 6, qui représentent le second mode de réalisation du dispositif 10 bidirectionnel d'évacuation de la vapeur, la première 15 soupape et la seconde 17 soupape sont décalées l'une par rapport à l'autre.

Dans ce cas, les un ou plusieurs canaux 16 primaires ne sont plus recouverts par le second 17 opercule et les un ou plusieurs canaux 18 secondaires ne sont plus recouverts par le premier 15 opercule.

Ainsi lorsque l'on se trouve dans la première position de fermeture de la boite 100, et au-delà de la pression P0, la première 11 soupape va laisser passer le flux à l'extérieur de la première 6 enceinte, dans une première 12 direction de passage qui est dirigée de l'intérieur de la première 6 enceinte vers l'extérieur.

Plus précisément le flux circule dans les uns ou plusieurs canaux 16 primaires et au-delà de la pression P0, le premier 15 opercule se déforme sous l'effet du flux de manière à permettre le passage du flux dans la première direction de passage.

Dans le même temps, la seconde 13 soupape, positionnée en opposition de la première 11 soupape, ne laisse pas passer la vapeur à l'extérieur de la première 6 enceinte dans la première 12 direction de passage.

Dans ce cas, le flux ne circule même pas dans les uns ou plusieurs canaux 18 secondaires.

Dans le cas maintenant où la pression dans la première 6 enceinte est inférieure à P0, le premier 15 opercule de la première 11 soupape n'est pas déformée et est étanche dans la première 12 direction de passage. Dans une deuxième 14 direction de passage, qui est dirigée de l'extérieur de la première 6 enceinte vers l'intérieur de celle-ci, le premier 15 opercule est également étanche. Dans ce cas de figure, le flux se dirigeant dans la deuxième 14 direction de passage ne peut pas traverser la première 11 soupape.

Dans le même temps, on peut noter que de l'eau peut éventuellement se positionner dans les un ou plusieurs canaux 18 secondaires de la seconde 13 soupape, sans pour autant que celle-ci puisse déformer le second 17 opercule. Dans ce cas de figure, le flux se dirigeant dans la deuxième 14 direction de passage ne peut pas traverser la seconde 13 soupape.

Dans le mode de fermeture de la boite 100 de la figure 6, la première 11 soupape, au-delà de la pression P0, ne laisse pas passer le flux à l'extérieur de la seconde 7 enceinte, dans une troisième 12a direction de passage, qui est dirigée de l'intérieur de la seconde 7 enceinte vers l'extérieur de celle-ci.

La seconde 13 soupape, elle, laisse passer le flux à l'extérieur de la seconde 7 enceinte au-delà de la pression P0 dans cette troisième direction 12a de passage.

En dessous de la pression P0, la seconde 13 soupape ne laisse pas passer de flux dans une quatrième 14a direction de passage opposée à la troisième direction 12a de passage, c'est-à-dire dirigée de l'extérieur de la seconde 7 enceinte vers l'intérieur de celle-ci.

La première 11 soupape, au-delà de la pression P0 est étanche à tout flux dans la quatrième 14a direction de passage.

De ce fait, la boite 100 est adaptée à la conservation des aliments.

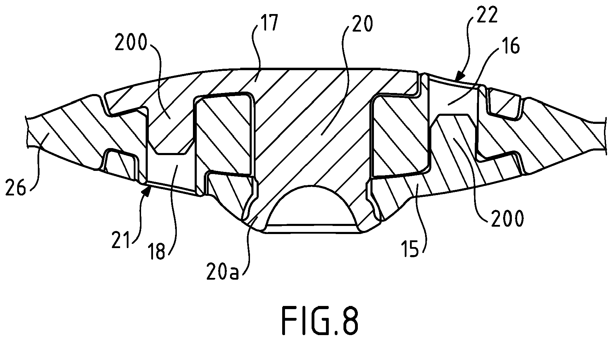

En outre afin de renforcer l'étanchéité du dispositif 10 bidirectionnel d'évacuation de la vapeur, le premier 15 opercule peut comprendre un ou plusieurs plots 200 comme visible à la figure 8. Ces un ou plusieurs plots 200 sont dimensionnés pour s'insérer dans le ou les plusieurs canaux 18 secondaires.

De la même manière le second 17 opercule peut comprendre un ou plusieurs plots 200 comme visible à la figure 8 et ces un ou plusieurs plots 200 sont dimensionnés pour s'insérer dans le ou les plusieurs canaux 16 primaires.

De cette manière l'étanchéité de la boite 100 est renforcée.

On comprendra que diverses modifications et/ou améliorations évidentes pour l'homme du métier peuvent être apportées au mode de réalisation de l'invention décrit dans la présente description sans sortir du cadre de l'invention définie par les revendications annexées.

Ainsi, dans une variante de réalisation non représentée, le couvercle pourra comporter une paroi bombée ou sphérique.

## Revendications

1. Couvercle (1) réversible pour boite de conservation ou de réchauffage comprenant des premiers (2) moyens de fixation étanches destinés à coopérer avec un bord supérieur (4) d'un récipient (5) lorsque le couvercle (1) est disposé selon un premier sens sur le récipient (5) et des seconds (3) moyens de fixation étanches destinés à coopérer avec ledit bord supérieur (4) du récipient (5) lorsque le couvercle est disposé en sens inverse sur le récipient (5), le couvercle (1) présentant une partie en relief qui peut être orientée vers l'intérieur du récipient (5) pour former avec ce dernier une première (6) enceinte fermée présentant un premier (8) volume, ou orientée vers l'extérieur du récipient (5) pour former avec ce dernier une seconde (7) enceinte fermée présentant un second (9) volume, distinct du premier (8) volume, **caractérisé en ce que** le couvercle (1) comporte un dispositif (10) bidirectionnel d'évacuation de la vapeur reliant deux faces opposées du couvercle et **en ce que** ledit dispositif (10) bidirectionnel d'évacuation permet le passage d'un flux entre les deux faces du couvercle (1) lorsque la différence de pression entre les deux faces est supérieure ou égale une valeur P0, notamment lors du réchauffage d'un aliment dans un four micro onde.

2. Couvercle (1) réversible selon la revendication précédente **caractérisé en ce que** le dispositif (10) bidirectionnel d'évacuation de la vapeur est hermétique à l'air lorsque la différence de pression entre les deux faces du couvercle est inférieure à la valeur P0.

3. Couvercle (1) réversible selon l'une des revendications précédentes **caractérisé en ce que** le dispositif (10) bidirectionnel d'évacuation de la vapeur est conçu pour assurer une herméticité à un flux d'eau.

4. Couvercle (1) réversible selon l'une des revendications précédentes **caractérisé en ce que** le dispositif (10) bidirectionnel d'évacuation de la vapeur comprend
- une première (11) soupape unidirectionnelle qui laisse passer un flux de vapeur lorsque la différence de pression entre une première face et une seconde face du couvercle est supérieure ou égale à une valeur P0 et qui est étanche lorsque la différence de pression entre la première et la seconde face du couvercle est inférieure P0,
- et une seconde (13) soupape, positionnée en opposition de la première (11) soupape, qui laisse passer un flux de vapeur lorsque la différence de pression entre la seconde face et la première face du couvercle est supérieure ou égale à une valeur P0 et qui est étanche lorsque la différence de pression entre la seconde et la première face du couvercle est inférieure à P0.

5. Couvercle (1) réversible selon la revendication précédente **caractérisé en ce que**
- la première (11) soupape est composée d'un premier (15) opercule et d'un ou plusieurs canaux (16) primaires traversant le couvercle (1), ledit premier (15) opercule est maintenu sur un coté du couvercle par un premier (40) moyen de maintien et il recouvre entièrement et de manière étanche les uns ou plusieurs canaux (16) primaires et à partir et au-delà de la pression P0, ledit premier (15) opercule se déforme sous l'effet d'un flux qui circule dans les un ou plusieurs canaux (16) primaires et
- la seconde soupape est composée d'un second (17) opercule et d'un ou plusieurs canaux (18) secondaires traversant le couvercle (1), ledit second (17) opercule est maintenu sur le couvercle (1), du coté opposé au premier (15) opercule, par un second (41) moyen de maintien, et il recouvre entièrement et de manière étanche les un ou plusieurs canaux (18) secondaires et à partir et au delà de la pression P0, ledit second (17) opercule se déforme sous l'effet d'un flux qui circule dans les un ou plusieurs canaux (18) secondaires.

6. Couvercle (1) réversible selon la revendication précédente caractérisé que le premier (15) et le second (17) opercule sont positionnés en vis-à-vis l'un de l'autre et de part et d'autre du couvercle (1), le premier (40) moyen de maintien et le second (41) moyen de maintien sont réunis en moyen de maintien commun qui est constitué par une ouverture (19) centrale qui traverse le couvercle (1) de part en part de celui-ci et dans laquelle est monté serré un moyeu (20) central qui maintient le premier (15) opercule et le second (17) opercule ensemble, et le premier (15) opercule recouvre de manière étanche les uns ou plusieurs canaux (18) secondaires et le second (17) opercule recouvre de manière étanche les un ou plusieurs canaux (16) primaires.

7. Couvercle (1) réversible selon la revendication précédente **caractérisé en ce que** le premier (15) opercule comprend un ou plusieurs trous traversant (21) primaires qui sont positionnés en face des un ou plusieurs canaux (18) secondaires et le second (17) opercule comprend un ou plusieurs trous traversant (22) secondaires qui sont positionnés en face des un ou plusieurs canaux (16) primaires.

8. Couvercle (1) réversible selon la revendication précédente **caractérisé en ce que** les un ou plusieurs canaux (16) primaires ou les un ou plusieurs canaux (18) secondaires comprennent un épaulement (150, 151) qui remontent dans les un ou plusieurs trous traversant (21) primaires ou dans les un ou plusieurs trous traversant (22) secondaires de manière à d'augmenter l'efficacité de l'étanchéité en limitant le passage d'eau entre les opercules (15, 17) et le couvercle (1).

9. Couvercle (1) réversible selon l'une des revendications 5 à 8 **caractérisé en ce que** le couvercle (1) comprend une zone bombée (25) sur laquelle les opercules (15, 17) sont positionnés en contrainte de manière à ne pas laisser passer de flux.

10. Couvercle (1) réversible selon l'une des revendications 5 à 9 **caractérisé en ce qu'**une collerette (26) entoure les opercules (15, 17) de part et d'autre du couvercle (1).

11. Couvercle (1) réversible selon l'une des revendications 5 à 10 **caractérisé en ce que** les opercules (15,17) sont réalisés en matière silicone ou élastomères thermoplastiques (TPE).

12. Couvercle (1) réversible selon les revendications 5 à 11 **caractérisé en ce que** les opercules (15,17) comprennent sur leur surface en contact avec le couvercle 1, une finition poli-miroir destinée à augmenter l'efficacité d'étanchéité des soupapes (11, 13), et la partie du couvercle 1 en contact avec la surface des opercules (15,17) peut comprendre également ou non une surface avec une finition poli-miroir.

13. Couvercle (1) réversible selon l'une des revendications précédentes **caractérisé en ce que** les un ou plusieurs premiers (2) moyens de fixation étanches et les un ou plusieurs seconds (3) moyens de fixation étanches sont constitués par une languette (27) positionnée sur le pourtour et à l'extérieur du couvercle (1) et qui comprend une première (28) rainure d'obturation placée au dessus de la languette (27) et une seconde (29) rainure d'obturation placée en dessous de la languette (27) et la première (28) et la seconde (29) rainure présentent un profil en U.

14. Couvercle (1) réversible selon l'une des revendications précédentes **caractérisé en ce que** le premier (15) opercule et/ou le second (17) opercule comprend au moins un plot (200) dimensionné pour s'insérer dans les un ou plusieurs canaux (16) primaires et/ou dans les un ou plusieurs canaux (18) secondaires.

15. Boite (100) de conservation ou de réchauffage comprenant un couvercle (1) selon l'une des revendications 1 à 14 et un récipient (5) qui comprend un bord supérieur (4) qui vient coopérer avec les moyens de fixation (2, 3) étanches du couvercle (1) **caractérisée en ce que** le bord supérieur (4) a un profil oblong qui vient s'insérer dans la première (28) rainure d'obturation pour former la première (6) enceinte ou dans la seconde (29) rainure d'obturation pour former la seconde (7) enceinte.

16. Boite (100) de conservation ou de réchauffage selon la revendication précédente **caractérisée en ce que** la boite (100) comprend un capot (101) comprenant un bord libre (102) qui vient coopérer avec la première (28) rainure d'obturation ou avec la seconde (29) rainure d'obturation de manière à former une enceinte étanche.

## Patentansprüche

1. Umdrehbarer Deckel (1) für eine Dose zum Aufbewahren oder Aufwärmen mit ersten Mitteln (2) zum dichten Verschließen, die mit einem oberen Rand (4) eines Behältnisses (5) zusammenwirken sollen, wenn der Deckel (1) in einer ersten Richtung auf das Behältnis (5) gesetzt wird, und mit zweiten Mitteln (3) zum dichten Verschließen, die mit dem oberen Rand (4) des Behältnisses (5) zusammenwirken sollen, wenn der Deckel in umgekehrter Richtung auf das Behältnis (5) gesetzt wird, wobei der Deckel (1) einen vorstehenden Teil aufweist, der sich zur Innenseite des Behältnisses (5) ausrichten lässt, um mit letzterem einen ersten (6) abgeschlossenen Raum mit einem ersten (8) Volumen zu bilden, oder zur Außenseite des Behältnisses (5) ausrichten lässt, um mit letzterem einen zweiten (7) abgeschlossenen Raum mit einem zweiten (9) Volumen zu bilden, das sich von dem ersten (8) Volumen unterscheidet, **dadurch gekennzeichnet, dass** der Deckel (1) eine bidirektionale Vorrichtung (10) zum Ablassen des Dampfes aufweist, die zwei gegenüberliegende Seiten des Deckels verbindet, und dass die bidirektionale Vorrichtung (10) zum Ablassen des Dampfes den Durchtritt einer Strömung zwischen den beiden Seiten des Deckels (1) gestattet, wenn der Druckunterschied zwischen den beiden Seiten mindestens einen Wert P0 hat, insbesondere beim Aufwärmen eines Nahrungsmittels in einem Mikrowellenherd.

2. Umdrehbarer Deckel (1) nach dem vorhergehenden Anspruch, **dadurch gekennzeichnet, dass** die bidirektionale Vorrichtung (10) zum Ablassen des Dampfes luftdicht ist, wenn der Druckunterschied zwischen den beiden Seiten des Deckels unter dem Wert P0 liegt.

3. Umdrehbarer Deckel (1) nach einem der vorhergehenden Ansprüche, **dadurch gekennzeichnet, dass** die bidirektionale Vorrichtung (10) zum Ablassen des Dampfes so konzipiert ist, dass sie die Undurchlässigkeit für eine Wasserströmung sicherstellt.

4. Umdrehbarer Deckel (1) nach einem der vorhergehenden Ansprüche, **dadurch gekennzeichnet, dass** die bidirektionale Vorrichtung (10) zum Ablassen des Dampfes Folgendes umfasst:
- ein erstes Einwegventil (11), das eine Dampfströmung durchlässt, wenn der Druckunterschied zwischen einer ersten Seite und einer zweiten Seite des Deckels mindestens einen Wert P0 hat, und abdichtet, wenn der Druckunterschied zwischen der ersten und der zweiten Seite des Deckels weniger als P0 beträgt,
- und ein zweites Ventil (13), das dem ersten Ventil (11) gegenüberliegend angeordnet ist und eine Dampfströmung durchlässt, wenn der Druckunterschied zwischen der zweiten Seite und der ersten Seite des Deckels mindestens einen Wert P0 hat, und abdichtet, wenn der Druckunterschied zwischen der zweiten und der ersten Seite des Deckels weniger als P0 beträgt.

5. Umdrehbarer Deckel (1) nach dem vorhergehenden Anspruch, **dadurch gekennzeichnet, dass**
- das erste (11) Ventil aus einem ersten (15) Verschlussorgan und einem oder mehreren primären Kanälen (16) besteht, die durch den Deckel (1) verlaufen, wobei das erste (15) Verschlussorgan auf einer Seite des Deckels von ersten (40) Haltemitteln gehalten wird und den einen oder mehrere primäre Kanäle (16) dicht abdeckt und sich das erste (15) Verschlussorgan unter der Einwirkung einer Strömung, die in dem einen oder mehreren primären Kanälen (16) zirkuliert, ab einem Wert P0 des Druckes verformt, und dass
- das zweite Ventil aus einem zweiten (17) Verschlussorgan und einem oder mehreren sekundären Kanälen (18) besteht, die durch den Deckel (1) verlaufen, wobei das zweite (17) Verschlussorgan auf der dem ersten (15) Verschlussorgan gegenüberliegenden Seite des Deckels (1) von zweiten (41) Haltemitteln gehalten wird und den einen oder mehrere sekundäre Kanäle (18) dicht abdeckt und sich das zweite (17) Verschlussorgan unter der Einwirkung einer Strömung, die in dem einen oder mehreren sekundären Kanälen (18) zirkuliert, ab einem Wert P0 des Druckes verformt.

6. Umdrehbarer Deckel (1) nach dem vorhergehenden Anspruch, **dadurch gekennzeichnet, dass** das erste (15) und das zweite (17) Verschlussorgan im Deckel (1) einander gegenüberliegen, wobei die ersten (40) Haltemittel und die zweiten (41) Haltemittel durch gemeinsame Haltemittel miteinander verbunden sind, die aus einer zentralen Öffnung (19) bestehen, die durch den ganzen Deckel (1) geht und in der eine zentrale Nabe (20) fest sitzt, die das erste (15) Verschlussorgan und das zweite (17) Verschlussorgan zusammenhält, und wobei das erste (15) Verschlussorgan den einen oder mehrere sekundäre Kanäle (18) dicht abdeckt und das zweite (17) Verschlussorgan den einen oder mehrere primäre Kanäle (16) dicht abdeckt.

7. Umdrehbarer Deckel (1) nach dem vorhergehenden Anspruch, **dadurch gekennzeichnet, dass** das erste (15) Verschlussorgan ein oder mehrere durchgehende primäre (21) Löcher umfasst, die gegenüber dem einen oder mehreren sekundären Kanälen (18) angeordnet sind, und dass das zweite (17) Verschlussorgan ein oder mehrere durchgehende sekundäre (22) Löcher umfasst, die gegenüber dem einen oder mehreren primären Kanälen (16) angeordnet sind.

8. Umdrehbarer Deckel (1) nach dem vorhergehenden Anspruch, **dadurch gekennzeichnet, dass** der eine oder mehrere primäre Kanäle (16) oder der eine oder mehrere sekundäre Kanäle (18) einen Absatz (150, 151) umfassen, die derart in das eine oder mehrere durchgehende primäre (21) Löcher oder in das eine oder mehrere durchgehende sekundäre (22) Löcher ragen, dass sie die Dichtwirkung erhöhen, indem sie den Durchfluss von Wasser zwischen den Verschlussorganen (15, 17) und dem Deckel (1) begrenzen.

9. Umdrehbarer Deckel (1) nach einem der Ansprüche 5 bis 8, **dadurch gekennzeichnet, dass** der Deckel (1) einen gewölbten Bereich (25) umfasst, an dem die Verschlussorgane (15, 17) unter Spannung angeordnet sind, sodass sie keine Strömung durchlassen.

10. Umdrehbarer Deckel (1) nach einem der Ansprüche 5 bis 9, **dadurch gekennzeichnet, dass** die Verschlussorgane (15, 17) auf beiden Seiten des Deckels (1) von einem Bund (26) umgeben sind.

11. Umdrehbarer Deckel (1) nach einem der Ansprüche 5 bis 10, **dadurch gekennzeichnet, dass** die Verschlussorgane (15, 17) aus Silikon oder thermoplastischen Elastomeren (TPE) hergestellt sind.

12. Umdrehbarer Deckel (1) nach einem der Ansprüche 5 bis 11, **dadurch gekennzeichnet, dass** die Verschlussorgane (15, 17) auf ihrer mit dem Deckel (1) in Berührung kommenden Oberfläche ein Hochglanz-Finish aufweisen, das dazu bestimmt ist, die Dichtwirkung der Ventile (11, 13) zu erhöhen, und dass der Teil des Deckels (1), der mit der Oberfläche der Verschlussorgane (15, 17) in Berührung kommt, ebenfalls eine Oberfläche mit Hochglanz-Finish aufweisen kann oder auch nicht.

13. Umdrehbarer Deckel (1) nach einem der vorhergehenden Ansprüche, **dadurch gekennzeichnet, dass** das eine oder mehrere erste Mittel (2) zum dichten Verschließen und das eine oder mehrere zweite Mittel (3) zum dichten Verschließen aus einer Lasche (27) bestehen, die am Umfang und außen am Deckel (1) angeordnet ist und eine erste (28) Rille zum Verschließen umfasst, die über der Lasche (27) platziert ist, und eine zweite (29) Rille zum Verschließen umfasst, die unter der Lasche (27) platziert ist, und dass die erste (28) und die zweite (29) Rille ein U-Profil aufweisen.

14. Umdrehbarer Deckel (1) nach einem der vorhergehenden Ansprüche, **dadurch gekennzeichnet, dass** das erste (15) Verschlussorgan und/oder das zweite (17) Verschlussorgan zumindest ein Stopfenelement (200) umfasst, das so ausgelegt ist, dass es sich in den einen oder mehrere primäre Kanäle (16) und/oder den einen oder mehrere sekundäre Kanäle (18) einfügt.

15. Dose (100) zum Aufbewahren oder Aufwärmen mit einem Deckel (1) nach einem der Ansprüche 1 bis 14 und einem Behältnis (5), das einen oberen Rand (4) aufweist, der mit den Mitteln (2, 3) zum dichten Verschließen des Deckels (1) zusammenwirkt, **dadurch gekennzeichnet, dass** der obere Rand (4) ein längliches Profil aufweist, das sich in die erste (28) Rille zum Verschließen setzen lässt, um den ersten (6) abgeschlossenen Raum zu bilden, oder in die zweite (29) Rille zum Verschließen setzen lässt, um den zweiten (7) abgeschlossenen Raum zu bilden.

16. Dose (100) zum Aufbewahren oder Aufwärmen nach dem vorhergehenden Anspruch, **dadurch gekennzeichnet, dass** die Dose (100) eine Haube (101) mit einem freien Rand (102) aufweist, der mit der ersten (28) Rille zum Verschließen oder mit der zweiten (29) Rille zum Verschließen zusammenwirkt, um einen dicht abgeschlossenen Raum zu bilden.

## Claims

1. Reversible lid (1) for storage or heating box comprising first sealed attachment means (2) for cooperating with an upper edge (4) of a container (5) when the lid (1) is arranged according to a first direction on the container (5) and second sealed attachment means (3) for cooperating with said upper edge (4) of the container (5) when the lid is arranged in the opposite direction on the container (5), the lid (1) having a raised portion which can be oriented towards the inside of the container (5) to form with the latter a first closed chamber (6) having a first volume (8), or oriented towards the outside of the container (5) to form with the latter a second closed chamber (7) having a second volume (9) different from the first volume (8), **characterised in that** the lid (1) comprises a two-way steam evacuation device (10) connecting two opposite sides of the lid and **in that** said two-way evacuation device (10) allows the passage of a flow between the two sides of the lid (1) when the pressure difference between the two sides is greater than or equal to a value P0, in particular when heating food in a microwave oven.

2. Reversible lid (1) according to the preceding claim, **characterised in that** the two-way steam evacuation device (10) is airtight when the pressure difference between the two sides of the lid is less than the value P0.

3. Reversible lid (1) according to one of the preceding claims, **characterised in that** the two-way steam evacuation device (10) is designed to be hermetic to a flow of water.

4. Reversible lid (1) according to one of the preceding claims, **characterised in that** the two-way steam evacuation device (10) comprises
- a first one-way valve (11) which allows a flow of steam to pass when the pressure difference between a first side and a second side of the lid is greater than or equal to a value P0 and which is sealed when the pressure difference between the first and second sides of the lid is less than P0,
- and a second valve (13), positioned opposite the first valve (11), which allows a flow of steam to pass when the pressure difference between the second side and the first side of the lid is greater than or equal to a value P0 and which is sealed when the pressure difference between the second and first sides of the lid is less than P0.

5. Reversible lid (1) according to the preceding claim, **characterised in that**
- the first valve (11) is composed of a first cap (15) and one or more primary channels (16) crossing through the lid (1), said first cap (15) is held on one side of the lid by a first holding means (40) and covers entirely and in a sealed manner the one or more primary channels (16), and from and above the pressure P0, said first cap (15) deforms under the effect of a flow which passes through the one or more primary channels (16), and
- the second valve is composed of a second cap (17) and one or more secondary channels (18) crossing through the lid (1), said second cap (17) is held on the lid (1), on the side opposite the first cap (15), by a second holding means (41) and covers entirely and in a sealed manner the one or more secondary channels (18), and from and above the pressure P0, said second cap (17) deforms under the effect of a flow which passes through the one or more secondary channels (18).

6. Reversible lid (1) according to the preceding claim, **characterised in that** the first (15) and second (17) caps are positioned opposite one another and on either side of the lid (1), the first holding means (40) and the second holding means (41) are joined in a common holding means consisting of a central opening (19) which crosses through the lid (1) from one side to the other and in which a central hub (20) is tightly mounted holding the first cap (15) and the second cap (17) together, and the first cap (15) covers in a sealed manner the one or more secondary channels (18) and the second cap (17) covers in a sealed manner the one or more primary channels (16).

7. Reversible lid (1) according to the preceding claim, **characterised in that** the first cap (15) comprises one or more primary through-holes (21) which are positioned opposite one or more secondary channels (18) and the second cap (17) comprises one or more secondary through-holes (22) which are positioned opposite one or more primary channels (16).

8. Reversible lid (1) according to the preceding claim, **characterised in that** the one or more primary channels (16) or the one or more secondary channels (18) comprise a shoulder (150, 151) which enters the one or more primary through-holes (21) or the one or more secondary through-holes (22) so as to increase the sealing efficiency by limiting the flow of water between the caps (15, 17) and the lid (1).

9. Reversible lid (1) according to one of claims 5 to 8, **characterised in that** the lid (1) comprises a domed region (25) on which the caps (15, 17) are positioned under stress so as to prevent flow.

10. Reversible lid (1) according to one of claims 5 to 9, **characterised in that** a collar (26) surrounds the caps (15, 17) on either side of the lid (1).

11. Reversible lid (1) according to one of claims 5 to 10, **characterised in that** the caps (15, 17) are made of silicone material or thermoplastic elastomers (TPE).

12. Reversible lid (1) according to claims 5 to 11, **characterised in that** the caps (15, 17) comprise a mirror-polished finish on their surface in contact with the lid 1 which is intended to increase the sealing efficiency of the valves (11, 13), and the part of the lid 1 in contact with the surface of the caps (15, 17) may also comprise or not a surface with a mirror-polished finish.

13. Reversible lid (1) according to one of the preceding claims, **characterised in that** the one or more first sealed attachment means (2) and the one or more second sealed attachment means (3) consist of a tongue (27) positioned on the periphery and outside of the lid (1) and which comprises a first blocking groove (28) placed above the tongue (27) and a second blocking groove (29) placed underneath the tongue (27), and the first (28) and second (29) grooves have a U-shaped profile.

14. Reversible lid (1) according to one of the preceding claims, **characterised in that** the first cap (15) and/or the second cap (17) comprise at least one stud (200) dimensioned to fit into the one or more primary channels (16) and/or into the one or more secondary channels (18).

15. Storage or heating box (100) comprising a lid (1) according to one of claims 1 to 14 and a container (5) which comprises an upper edge (4) which cooperates with the sealed attachment means (2, 3) of the lid (1), **characterised in that** the upper edge (4) has an oblong profile which is inserted in the first blocking groove (28) to form the first chamber (6) or in the second blocking groove (29) to form the second chamber (7).

16. Storage or heating box (100) according to the preceding claim, **characterised in that** the box (100) comprises a cover (101) comprising a free edge (102) which cooperates with the first blocking groove (28) or with the second blocking groove (29) so as to form a sealed chamber.
